# EUROPÄISCHE PATENTSCHRIFT

(11) **EP 0 872 706 B1**
(45) Veröffentlichungstag und Bekanntmachung des Hinweises auf die Patenterteilung: **04.02.2004**
(21) Anmeldenummer: 98110602.4
(22) Anmeldetag: 23.08.1994
(51) Int. Cl.: G01B 7/00, G01B 3/00, G01B 7/012

(54) **Koordinatenmessgerät mit einem Taster in Form eines Festkörperschwingers**
Co-ordinate measuring instrument with a feeler in the form of a solid body oscillator
Appareil de mesure de coordonnées pourvu d'un palpeur se présentant sous forme d' oscillateur monolithique

(30) Priorität: 13.09.1993 DE 4331069
(43) Veröffentlichungstag der Anmeldung: 21.10.1998
(62) Teilanmeldung aus: 94925468.4
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Breyer, Karl Hermann, Dr., 89518 Heidenheim (DE); Heier, Helmut, 73434 Aalen (DE); Meyer, Gerhard, 73434 Aalen (DE)

(56) Entgegenhaltungen:
- DE-U- 9 213 059
- FR-A- 2 468 875

## Beschreibung

In letzter Zeit sind Taster für Koordinatenmeßgeräte bekannt geworden, die nur eine sehr geringe Meßkraft von weniger als 1 mN auf das zu vermessende Werkstück ausüben und mit einem sogenannten Festkörperschwinger arbeiten, dessen Schwingungsamplitude sich bei Annäherung an das zu vermessende Objekt ändert. Ein derartiger Taster ist beispielsweise in dem deutschen Gebrauchsmuster 92 13 059 beschrieben.

Dieser bekannte Taster besitzt einen dünnen Glasstab als Tastelement, der an einen Zinken eines Stimmgabelquarzes angeklebt ist, und zwar so, daß die Längsachse des Glasstabs parallel zur Schwingungsrichtung des Stimmgabelquarzes ausgerichtet ist.

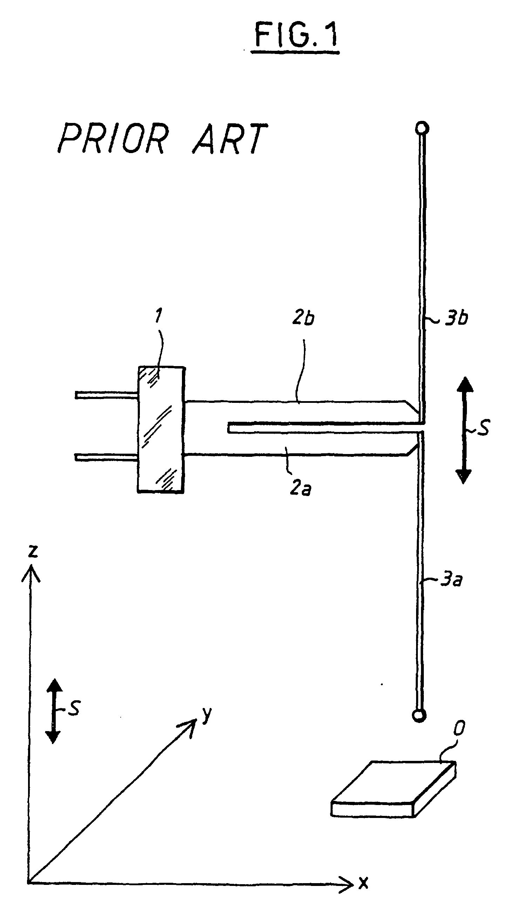

Verwendet man einen derartigen Taster in einem Koordinatenmeßgerät und richtet die Längsachse des Stabes bzw. Tastelements parallel zu einer der Meßrichtungen des Koordinatenmeßgeräts aus, wie das in Figur 1 skizziert ist, so stellt man fest, daß die erzielbaren Antastunsicherheiten in der Koordinatenrichtung Z, d.h. in Längsrichtung des Stabes (3a) und parallel zur Schwingungsrichtung S des Stimmgabelquarzes, deutlich kleiner sind als die Antastunsicherheiten, die in den Koordinatenrichtungen x und y senkrecht zur Längsachse des Stabes (3a) gemessen werden. Die Meßunsicherheiten liegen um einen Faktor 5 auseinander, während beispielsweise für die Meßachse Z eine Antastunsicherheit von nur 1,0 µm ermittelt wurde, beträgt diese für die Antastrichtungen x und y ca. 5µm.

Eine solche Unsymmetrie in den Antastunsicherheiten ist jedoch unerwünscht, denn bei der Vermessung von Geometrieelementen wie Bohrungen etc. muß von verschiedenen Seiten angetastet werden und die Meßunsicherheit sollte für alle Antastpunkte dem gleichen für das Meßgerät spezifizierten Wert entsprechen.

Die französische Patentanmeldung FR 8023047 zeigt einen Taster, bei dem in unterschiedlichen Raumrichtungen ausgerichtete Taststifte an einer Hülle eines zentralen Körpers befestigt sind. Unter der Hülle befindet sich ein Piezzoschwinger. Der Piezzoschwinger weist hiebei eine Schwingungsrichtung auf, die normal auf die Hülle zeigt, so daß die an der Hülle befestigten Taststifte im wesentlichen in Richtung der Taststiftlängsachse schwingen. Die einzige Ausnahme hiervon bildet die erste in der Patentanmeldung beschriebenen Ausführungsform, bei der der vertikal ausgerichtete Taststift mit sehr geringer Amplitude senkrecht zu seiner Längsachse schwingt.

Es ist somit aus der betreffenden Patentanmeldung also kein Festkörperschwinger bekannt, der mit seiner Schwingungsrichtung raumschräg im Winkel zu allen drei Meßrichtungen des Koordinatenmeßgerätes angeordnet ist, bei dem sich das antastseitige Ende des Stabes parallel zu einer der Meßrichtungen des Koordinatenmeßgerätes erstreckt.

Es ist deshalb die Aufgabe der Erfindung, bei einem Koordinatenmeßgerät mit einem Taster des eingangs genannten Typs diesen so anzuordnen oder zu beschalten, daß sich gleiche möglichst niedrige Antastunsicherheiten in den drei Meßrichtungen x, y und z zuverlässig ergeben.

Diese Aufgabe wird für ein Koordinatenmeßgerät mit einem Taster in Form eines Festkörperschwingers, an dem ein dünner Stab als Tastelement angebracht ist, mit den in den Ansprüchen 1 und 6 angegebenen Maßnahmen gelöst.

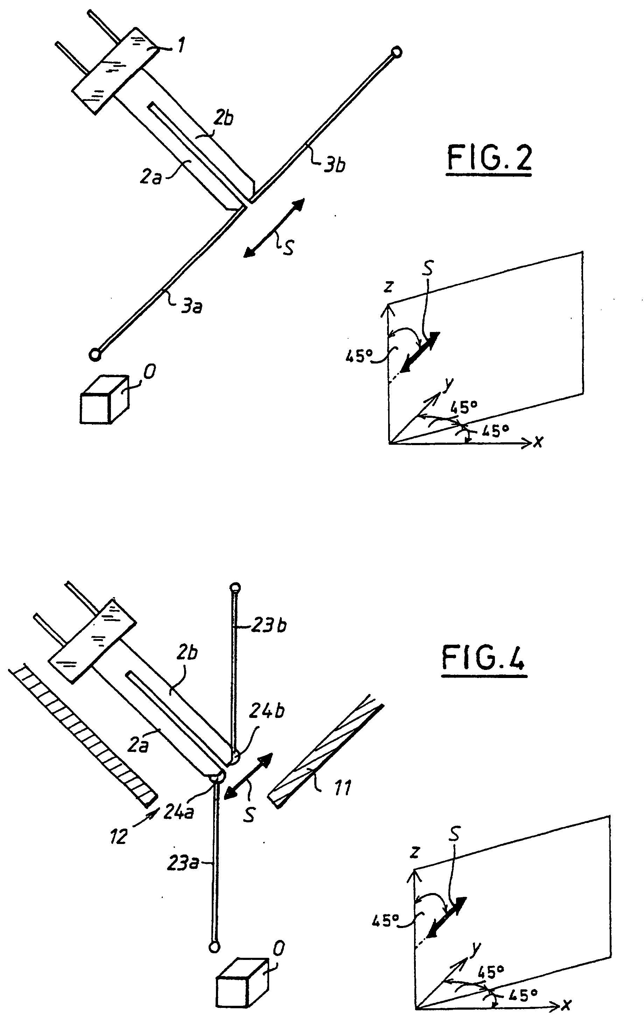

Mit der in Figur 2 skizzierten Anordnung, bei der der Festkörperschwinger (1/2) bezüglich seiner Schwingungsrichtung S unter einem Winkel von vorzugsweise 45° zu allen drei Meßrichtungen x, y und z des Koordinatenmeßgeräts angeordnet ist, ergeben sich vergleichbare, niedrige Antastunsicherheiten von 2,5µm in allen drei Antastrichtungen. Allerdings ist die skizzierte Anordnung insofern ungünstig, als nun auch das Tastelement, d.h. der Stab (3a) schräg zu den drei in dem Koordinatenmeßgerät möglichen Antastrichtungen x, y und z ausgerichtet ist. Da die zu vermessenden Objekte O mit den zu vermessenden Geometrieelementen in der Regel zu den Meßachsen x, y und z ausgerichtet auf dem Tisch des Koordinatenmeßgeräts aufgespannt werden, lassen sie sich besser vermessen, wenn das Tastelement, d.h. der an den Festkörperschwinger angesetzte Stab, ebenfalls parallel zu einer der drei Meßrichtungen des Koordinatenmeßgeräts ausgerichtet ist. Es ist daher zweckmäßig, wenn zumindest das antastseitige Ende des Stabes parallel zu einer der Meßrichtungen des Koordinatenmeßgeräts und damit winklig zur Schwingungsrichtung S des Festkörperschwingers ausgerichtet ist, beispielsweise indem der Stab entsprechend abgeknickt wird oder von vornherein ohne Knick winklig an dem Festkörperschwinger befestigt wird.

Weitere Vorteile der Erfindung ergeben sich aus der nachstehenden Beschreibung von Ausführungsbeispielen anhand der Figuren 1 - 4 der beigefügten Zeichnungen.
- Figur 1: ist eine vereinfachte Prinzipsskizze, die den Fall der Ausrichtung der Schwingungsrichtung S des Festkörperschwingers parallel zu einer Meßrichtung (Z) darstellt;
- Figur 2: ist eine vereinfachte Prinzipsskizze, die den Fall der Ausrichtung des Festkörperschwingers im Winkel zu allen drei Meßachsen gemäß einem ersten Ausführungsbeispiel der Erfindung darstellt;
- Figur 3: zeigt ein bevorzugtes Ausführungsbeispiel der Erfindung mit raumschräg angeordnetem Festkörperschwinger und parallel zur Meßachse (Z) abgewinkeltem Tastelement;
- Figur 4: zeigt ein weiteres Ausführungsbeispiel der Erfindung mit raumschräg angeordnetem Festkörperschwinger und parallel zur Meßachse (Z) ausgerichtetem Tastelement;

In der Figur 1 ist ein sogenannter Schwingquarz-Taster dargestellt, wie er in ähnlicher Weise im deutschen Gebrauchsmuster 92 13 059 beschrieben ist. Als Festkörperschwinger dient ein Stimmgabelquarz der beispielsweise auch in Quarzuhren verwendet wird. Dabei sitzt der eigentliche gabelförmige Quarz in einer Fassung (1) mit den elektrischen Anschlüssen und an das vordere Ende jeder Zinke der Gabel ist ein dünner Glasstab (3a) bzw. (3b) angeklebt. Während der eine Glasstab (3a) mit der an seinem vorderen Ende angeschmolzenen Kugel das eigentliche Tastelement bildet, dient der zweite an dem anderen Zinken (2b) des Quarzes angeklebte, gleichgroße und gleichschwere Stab (3b) zur Symmetrisierung des Schwingers.

Bei der in Figur 1 gezeigten üblichen Ausrichtung des Festkörperschwingers mit seiner Schwingungsrichtung S parallel zur Meßachse Z des Koordinatenmeßgerätes, in dem er verwendet wird, ergeben sich die eingangs diskutierten Unterschiede der Antastunsicherheit bezogen auf die Meßrichtung.

Diese Unsymmetrien sind erfindungsgemäß mit der in Figur 2 skizzierten raumschrägen Anordnung des Festkörperschwingers vermieden. Hierbei ist der Stimmgabelquarz so an dem hier nicht dargestellten Meßarm des Koordinatenmeßgerätes angebaut, daß die Schwingungsrichtung S der beiden Gabelzinken (2a und 2b) unter einem Winkel von 45° zu allen drei Meßachsen x, y und z des Koordinatenmeßgeräts ausgerichtet ist. Entsprechend ergeben sich beim Antasten in den drei genannten Richtungen gleiche, niedrige Antastunsicherheiten von 2,5 µm für alle drei Meßrichtungen.

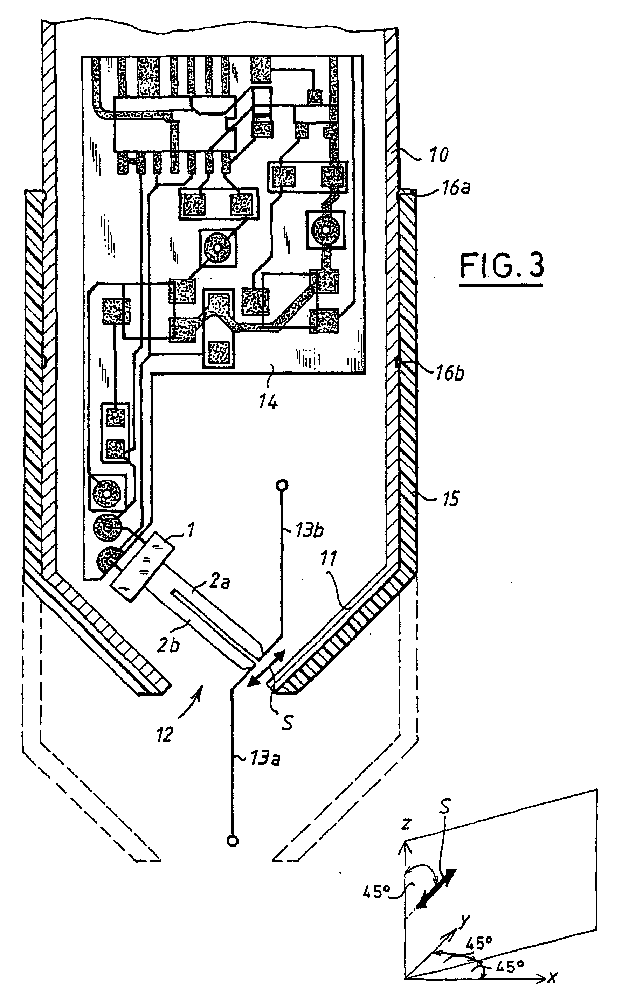

In dem bevorzugten Ausführungsbeispiel nach Figur 3 ist im einzelnen dargestellt, wie der Taster konstruktiv ausgeführt ist. Er besitzt ein zylindrisches Gehäuse (10), in das die Platine (14) mit der elektronischen Schaltung für die Anregung des Schwingquarzes und die Verarbeitung des Tastsignals eingesetzt ist. Am unteren Ende der Platine (14) ist der Stimmgabelquarz mit seiner Fassung (1) unter einem Winkel von 45° zur Symmetrieachse des Gehäuses befestigt.

An den beiden Enden der Zinken (2a und 2b) des Stimmgabelquarzes sind zwei Glasstäbe befestigt, deren größeres, dem Stimmgabelquarz abgewandtes Ende parallel zur Gehäuseachse abgewinkelt ist.

Das untere Ende (11) des Gehäuses (10) ist konisch geformt und besitzt eine zentrale Öffnung (12), durch die das antastseitige Ende des Glasstabs (13a) hindurchgreift. Diese konische Ausformung des unteren Gehäuseendes wird durch die raumschräge Anordnung des Stimmgabelquarzes begünstigt und verbessert die Zugänglichkeit beim Messen mit dem Taster in engen Werkstücken, zumal die Länge des Glasstabs (13a) bei Verwendung üblicher Uhrenquarze aufgrund der für das Anschwingen maximal zulässigen Masse an den Zinken der Stimmgabel auf ca. 10 mm begrenzt ist.

Um das Gehäuse (10) ist eine Kunststoffhülse (15) gelegt, die an ihrem vorderen Ende ebenfalls konisch geformt ist und zum Schutz des Tasters bei Nichtgebrauch in die gestrichelt gezeichnete Stellung geschoben werden kann. Zwei Ringnuten (16a und 16b) im Gehäuse (10) sichern in Verbindung mit einem Ringwulst am oberen Ende der Kunststoffhülse (15) diese in den beiden bevorzugten Stellungen.

Beim Einbau in das Koordiantenmeßgerät wird das Gehäuse (10) so gedreht, daß die Stimmgabel (2a/2b) des Quarzes und damit auch die Schwingungsrichtung S wie skizziert in einer Ebene liegt, die unter einem Winkel von vorzugsweise 45° zu den beiden waagerechten Koordinatenrichtungen x und y ausgerichtet ist.

Mit dem beschriebenen Taster lassen sich die üblicherweise in Z-Richtung ausgerichteten Flächen und Bohrungen von Werkstücken leicht antasten, was deren Zugänglichkeit betrifft. Gleichzeitig ergeben sich in allen drei Koordinatenrichtungen gleiche Werte für die Antastunsicherheit.

Dieser Effekt läßt sich auch mit dem in Figur 4 dargestellten, etwas abgewandelten Ausführungsbeispiel erzielen. Dort sind die beiden Glasstäbe (23a und 23b) ohne Knick von vorneherein winklig an die Zinken (2a und 2b) des Stimmgabelquarzes angeschweißt und zwar entweder mit Hilfe eines Laserstrahls oder eines Lichtbogens.

In den Ausführungsbeispielen wurde jeweils ein Festkörperschwinger mit einer einzigen Schwingungsrichtung dargestellt, die winklig zu den Meßrichtungen des Koordinatenmeßgeräts ausgerichtet wurde. Hierdurch ergeben sich vergleichbar große Komponenten der Schwingung des Tastelements in den drei Meßrichtungen.

Es ist jedoch auch möglich, das Antastelement mit einem Festkörperschwinger zu betreiben, der gleichzeitig in mehreren Raumrichtungen schwingt bzw. mehrere Schwingungsmoden des Tastelements anregt. Vergleichbar kleine Antastunsicherheiten in allen drei Raumrichtungen lassen sich dann realisieren, wenn sichergestellt wird, daß sich vergleichbar große Schwingungsamplituden des Tastelements in den drei Raumrichtungen ergeben.

## Patentansprüche

1. Koordinatenmeßgerät mit einem Taster in Form eines Festkörperschwingers (1/2), an dem ein dünner Stab (3a) als Tastelement angebracht ist, wobei der Festkörperschwinger (1/2) mit seiner Schwingungsrichtung (s) raumschräg im Winkel zu allen drei Meßrichtungen (x, y, z) des Koordinatenmeßgeräts angeordnet ist und sich zumindest das antastseitige Ende des Stabes (13a) parallel zu einer der Meßrichtungen (z) des Koordiantenmeßgeräts erstreckt und winklig zur Schwingungsrichtung (s) des Festkörperschwingers (1/2) ausgerichtet ist.

2. Koordinatenmeßgerät nach Anspruch 1, wobei der Winkel etwa 45° bezogen auf alle drei Meßrichtungen (x, y, z) ist.

3. Koordinatenmeßgerät nach Anspruch 1, wobei der dünne Stab (13a) geknickt ist, so daß sein antastseitiges Ende (13c) parallel zu einer Meßrichtung (z) des Koordinatenmeßgeräts und sein anderes Ende parallel zur Schwingungsrichtung (s) des Festkörperschwingers (1/2) ausgerichtet ist.

4. Koordinatenmeßgerät nach Anspruch 1, wobei der dünne Stab (23a) ohne Knick winklig an dem Festkörperschwinger (1/2) befestigt ist.

5. Koordinatenmeßgerät nach Anspruch 1, wobei der Festkörperschwinger (1/2) in ein antastseitig konisch geformtes Gehäuse (10/11) eingebaut ist, durch dessen zentrale Öffnung (12) das Tastelement (13) hindurchgreift.

## Claims

1. Coordinate measurement device having a probe in the form of a solid state oscillator (1/2) , to which a thin rod (3a) is fitted as a probe element, with the solid state oscillator (1/2) being arranged with its oscillation direction (s) three-dimensionally inclined at an angle to all three measurement directions (x, y, z) of the coordinate measurement device, and at least that end of the rod (13a) which is on the probe side extending parallel to one of the measurement directions (z) of the coordinate measurement device, and being aligned at an angle to the oscillation direction (s) of the solid state oscillator (1/2).

2. Coordinate measurement device according to Claim 1, with the angle being approximately 45° with respect to all three measurement directions (x, y, z).

3. Coordinate measurement device according to Claim 1, with the thin rod (13a) being bent such that its end (13c) on the probe side is aligned parallel to one measurement direction (z) of the coordinate measurement device, and its other end is aligned parallel to the oscillation direction (s) of the solid state oscillator (1/2).

4. Coordinate measurement device according to Claim 1, with the thin rod (23a) being attached without a bend at an angle to the solid state oscillator (1/2).

5. Coordinate measurement device according to Claim 1, with the solid state oscillator (1/2) being installed in a housing (10/11) which is shaped conically on the probe side and through whose central opening (12) the probe element (13) passes.

## Revendications

1. Appareil de mesure de coordonnées pourvu d'un palpeur se présentant sous la forme d'un oscillateur monolithique (1/2) sur lequel est montée une mince tige (3a) faisant office d'élément de palpage, l'oscillateur monolithique (1/2) étant disposé de manière à ce que son sens d'oscillation (s) soit en biais dans l'espace selon un angle donné par rapport aux trois directions de mesure (x, y, z) et au moins l'extrémité côté palpage de la tige (13a) s'étend parallèlement à l'une des directions de mesure (z) de l'appareil de mesure de coordonnées et est dirigé selon un certain angle par rapport au sens d'oscillation (s) de l'oscillateur monolithique (1/2).

2. Appareil de mesure de coordonnées selon la revendication 1, l'angle étant d'environ 45° par rapport aux trois directions de mesure (x, y, z).

3. Appareil de mesure de coordonnées selon la revendication 1, la mince tige (13a) étant coudée de manière à ce que son extrémité côté palpage (13c) soit dirigée parallèlement à une direction de mesure (z) de l'appareil de mesure de coordonnées et sont autre extrémité soit dirigée parallèlement au sens d'oscillation (s) de l'oscillateur monolithique (1/2).

4. Appareil de mesure de coordonnées selon la revendication 1, la mince tige (23a) étant fixée sans coude et selon un certain angle à l'oscillateur monolithique (1/2).

5. Appareil de mesure de coordonnées selon la revendication 1, l'oscillateur monolithique (1/2) étant monté dans un boîtier (10/11) de forme conique du côté du palpage et à travers l'orifice central (12) duquel passe l'élément de palpage (12).
